# EUROPÄISCHE PATENTSCHRIFT

(11) **EP 3 013 657 B1**
(45) Veröffentlichungstag und Bekanntmachung des Hinweises auf die Patenterteilung: **16.01.2019**
(21) Anmeldenummer: 14746948.0
(22) Anmeldetag: 23.06.2014
(51) Int. Cl.: B60W 10/00, B60W 10/02, B60W 10/10, B60W 10/18, B60W 10/20, B60W 40/09

(54) **STEUERVORRICHTUNG UND VERFAHREN ZUM BETREIBEN EINER STEUERVORRICHTUNG EINES KRAFTFAHRZEUGS**
CONTROL DEVICE AND METHOD FOR OPERATING A CONTROL DEVICE OF A MOTOR VEHICLE
DISPOSITIF DE COMMANDE ET PROCÉDÉ POUR FAIRE FONCTIONNER UN DISPOSITIF DE COMMANDE D'UN VÉHICULE AUTOMOBILE

(30) Priorität: 29.06.2013 DE 102013010930
(43) Veröffentlichungstag der Anmeldung: 04.05.2016
(73) Patentinhaber: Audi AG, 85045 Ingolstadt (DE)
(72) Erfinder: STADLER, Michael, 85110 Arnsberg (DE)
(74) Vertreter: Lehle, Josef
(86) Internationale Anmeldenummer: PCT/EP2014/001699
(87) Internationale Veröffentlichungsnummer: WO 2014/206548

(56) Entgegenhaltungen:
- EP-A1- 2 293 255
- WO-A1-03/084787
- WO-A1-2011/031933
- US-A1- 2013 197 715

## Beschreibung

Die Erfindung betrifft ein Verfahren zum Betreiben einer Steuervorrichtung eines Kraftfahrzeugs sowie eine Steuervorrichtung zum Betreiben des Verfahrens.

Verfahren und Vorrichtungen, die während eines Betriebs des Kraftfahrzeugs eine Erfassung, Auswertung und Verwaltung von Betriebsdatenwerten, insbesondere Motorendrehzahl, Motorenlast, Bremskraft, Gasannahme und dergleichen erlauben, sind schon seit längerer Zeit bekannt. Aus solchen Betriebsdaten lassen sich Rückschlüsse über einen Zustand eines Kraftfahrzeugs ziehen und darüber hinaus auch Empfehlungen für Maßnahmen, beispielsweise Inspektionen, Austausch von Ersatzteilen usw. ableiten.

Bisher war es dem Fahrer selbst nur möglich Rückschlüsse auf seinen Fahrverhalten zu ziehen, indem er einen Kraftstoffverbrauch, eine Laufleistung und/oder eine Reparaturhäufigkeit des Kraftfahrzeug als Anhaltspunkt verwendete.

Neuere Verarbeitungsvorrichtungen für Betriebsdaten für Kraftfahrzeuge erlauben es die Kraftfahrzeug-Betriebsdaten systematisch zu erfassen, zu verarbeiten und zu verwalten. Demnach kann ein Halter des Fahrzeugs umfassend über den Zustand des Kraftfahrzeugs informiert werden und daraus notwendige Schritte zum Erhalt einer Fahrleistung seines Kraftfahrzeugs ableiten.

In der Druckschrift EP 2 293 255 A1 und DE 198 12 318 A1 wird eine gattungsbildende Steuervorrichtung mit einem in einem Dashboard-Rechner eines Kraftfahrzeug integriertes elektronisches Fahrtenbuch offenbart, welches in Abhängigkeit von Betriebsdaten vorbestimmte Maßnahmen- bzw. Aktionsprogramme auslöst. Darin werden Informationen bezüglich des Kraftfahrzeugs und/oder eines Fahrers gesammelt und können an zentraler Stelle für Fahrer, Halter, Werkstatt usw. bereit gestellt werden. Darüber hinaus ist ein schneller Zugriff auf die Betriebsdaten realisierbar und eine fälschungssicherer Zugangseinschränkung gewährleistbar. Schließlich ermöglicht der Dashboard-Rechner eine Aufstellung von Fahrerprofilen anhand zugehöriger Betriebsdaten. Mit diesen Fahrerprofilen können bestimmte Anweisungen an den Fahrer oder das Fahrzeug verbunden werden, beispielsweise Lernprogramme für rationelles Fahren hinsichtlich Verbrauch und Materialverschleiß. Zusätzlich ist auch der umgekehrte Weg einer Adaptation des Fahrzeugs an das Fahrerprofil vorgesehen, wobei bestimmte Federungseinstellungen, Getriebeübersetzungen, Drosselfunktionen usw. gesteuert werden. Allerdings werden die ermittelten Daten bzw. das Fahrprofil, das ein Fahrverhalten des Fahrers widerspiegelt, ausschließlich in dem Kraftfahrzeug selbst verwendet.

Es ist Aufgabe der vorliegenden Erfindung, eine Steuervorrichtung sowie ein Verfahren zum Betreiben einer Steuervorrichtung eines Kraftfahrzeugs mittels eines Fahrerprofils bereit zu stellen, welches einen flexiblen und einfachen Einsatz des Fahrerprofils ermöglicht.

Die Aufgabe wird erfindungsgemäß mittels eines Verfahrens zum Betreiben einer Steuervorrichtung eines Kraftfahrzeugs gemäß Anspruch 1 gelöst. Das Verfahrens zum Betreiben der Steuervorrichtung des Kraftfahrzeugs mittels eines Fahrerprofils umfasst die folgenden Schritte, wobei:
- messtechnisch ermittelte Betriebsdaten von Parametern von zumindest einer eine Fahrdynamik eines ersten Kraftfahrzeugs charakterisierenden oder beeinflussenden Funktionsgruppe von einer Betriebsdaten-Erfassungseinrichtung aufgenommen werden;
- die aufgenommenen Betriebsdaten mittels einer Betriebsdaten-Verarbeitungseinrichtung zu einem spezifischen Fahrerprofil des Kraftfahrzeugs umgerechnet werden;
- das Fahrerprofil des Kraftfahrzeugs über eine Schnittstelle zum Ausgeben bereitgestellt wird;
- das Fahrerprofil in einem Zwischenspeicher gespeichert wird;
- das Fahrerprofil aus dem Zwischenspeicher in eine Speichereinrichtung einer Steuervorrichtung eines Kraftfahrzeugs übertragen wird;
- und von der Steuervorrichtung zum Vor-Einstellen von zumindest einer eine Fahrdynamik eines Kraftfahrzeugs charakterisierenden oder beeinflussenden Funktionsgruppe verwendet wird.

Durch das Vorsehen eines Zwischenspeicherungsschrittes für das erstellte Fahrerprofil, ist es möglich, dieses flexibel einzusetzen. Somit kann das Fahrerprofil beispielsweise zur Wartung des Kraftfahrzeugs oder zur Anpassung des Kraftfahrzeugs an das Fahrerprofil bzw. Fahrverhalten des Fahrers verwendet werden. Darüber hinaus ist die Anpassung eines Fahrzeugs an das Fahrverhalten des Fahrers auch für solche Fahrzeuge möglich, mit denen der Fahrer noch gar nicht gefahren ist. Ein solches Fahrerprofil kann beispielsweise bei einer Fahrzeugbestellung mit übermittelt werden. Dies ist insbesondere dann besonders vorteilhaft, wenn intelligente Steuergeräte in Kraftfahrzeugen anhand einer längeren Lernphase ein Ansprechverhalten bzw. Fahrverhalten des Fahrzeugs an den spezifischen Fahrer anpassen. Durch Übertragen des Fahrprofils auf das "neue" Kraftfahrzeug, kann eine langwierige Lernphase einfach überbrückt werden.

In einer vorteilhaften Ausführungsform der Erfindung erfolgt das Aufnehmen der Betriebsdaten der Parameter, das Umrechnen der Betriebsdaten zu einem spezifischen Fahrerprofil fortlaufend in vorbestimmten Zeitintervallen. Eine fortlaufende Anpassung des Fahrerprofils an das Fahrverhalten des Fahrers stellt sicher, dass eine durchschnittliche bzw. von außergewöhnlichen Abweichungen beim Fahrverhalten des Fahrers unabhängige Aufnahme der Betriebsdaten der Parameter erfolgt, die zur Bildung des Fahrerprofils dienen.

Besonderes flexibel wird das Fahrerprofil dadurch einsetzbar, wenn das Übertragen des Fahrerprofils in eine der Steuervorrichtung zugehörige oder zugeordnete Speichereinrichtung erfolgt. Bei einer der Steuervorrichtung zugehörigen Speichereinrichtung kann es sich um eine in der Steuervorrichtung integrierten Speichereinrichtung handeln, während zusätzlich oder alternativ das Fahrerprofil auf eine der Steuervorrichtung extern zugeordnete Speichereinrichtung erfolgen kann. Dadurch kann gleichzeitig im Fahrzeug wie auch außerhalb des Fahrzeugs, beispielsweise in einer Kfz-Werkstatt oder beim Autohersteller selbst eine Ferndiagnose oder Anpassung des Fahrzeugs vorgenommen werden. Dazu ist zur Übertragung des Fahrerprofils auf eine der Steuervorrichtung zugeordnete Speichereinrichtung eine geeignete digitale Verbindung notwendig. Diese kann kabelgebunden oder kabellos über den Äther erfolgen. Dadurch lässt sich auch eine ziemlich realistische Wiedergabe des Fahrverhaltens des Fahrers bei Echtzeitbedingungen durchführen.

Bei einer besonders bevorzugten Ausführungsform der Erfindung erfolgt die Übertragung des Fahrerprofils aus dem Zwischenspeicher in eine Speichereinrichtung der Steuereinrichtung desselben oder eines baugleichen weiteren Fahrzeugs. Demnach können die Daten auch verwendet werden, falls ein Steuergerät, welches autonom dazulernt (z. B. durch neuronale Netze), defekt ist und ausgetauscht werden muss, um das Fahrverhalten/Ansprechverhalten des Fahrzeugs wieder auf die neue Steuervorrichtung aufzusetzen, ohne dass eine "neue" Anlernphase gestartet werden muss. Analog erfolgt eine Übertragung auf ein baugleiches Kraftfahrzeug, wobei dadurch ebenfalls die Lernphase überbrückt werden kann.

Darüber hinaus können die Daten des Fahrerprofils auch dazu verwendet werden, demselben Fahrer eine andere für ihn "besser" geeignete Motorvariante/Getriebevariante anzubieten bzw. zu empfehlen, um beispielsweise einen niedrigeren Kraftstoffverbrauch zu ermöglichen oder spezifischen Ansprüchen des Fahrers an sportliches Verhalten usw. Rechnung zu tragen.

So werden erfindungsgemäß beim Übertragen des Fahrerprofils in die Steuereinrichtung eines Kraftfahrzeugs unterschiedlichen Typs das Fahrerprofil mittels zumindest eine Korrekturfaktors angepasst. Dadurch ist das Fahrerprofil noch flexibler einsetzbar, und lässt eine Anpassung bzw. Abstimmung eines neuen Wagens des betreffenden Fahrers noch leichter vornehmen.

Damit eine Anpassung bei der Übertragung des Fahrerprofils in eine Steuereinrichtung eines Kraftfahrzeugs unterschiedlichen Typs besonders effektiv vorgenommen werden kann, umfasst der Korrekturfaktor zum Anpassen des Fahrerprofils des zweiten Kraftfahrzeugs einen Parameter für einen Schwerpunkt- und/oder einen Gewichts- und/oder räumlichen Abmessungs-Unterschied der beiden Fahrzeuge - des Fahrzeugs, aus dem das Fahrerprofil stammt und dem "neuen" Kraftfahrzeug, das sich von dem ursprünglichen Fahrzeug unterscheidenden Fahrzeugtyps.

Ein weiterer Aspekt der Erfindung betrifft eine Steuervorrichtung eines Kraftfahrzeugs gemäß Anspruch 7. Die Steuervorrichtung des Kraftfahrzeugs umfasst:
- eine Betriebsdaten-Erfassungseinrichtung für die Aufnahme messtechnisch ermittelter Betriebsdaten von Parametern von zumindest einer eine Fahrdynamik des Kraftfahrzeugs charakterisierenden oder beeinflussenden Funktionsgruppe;
- eine Betriebsdaten-Verarbeitungseinrichtung zur Umrechnung der aufgenommenen Betriebsdaten der Parameter zu einem spezifischen Fahrerprofil;
- eine Speichereinrichtung die dazu ausgelegt ist, ein Fahrerprofil aufzunehmen, um eine Voreinstellung von zumindest einer eine Fahrdynamik des Kraftfahrzeugs charakterisierende oder beeinflussende Funktionsgruppe vorzunehmen,
- wobei die Steuervorrichtung eine Schnittstelle zum Ausgeben oder Eingeben des Fahrerprofils aufweist.

Um einen flexiblen Einsatz des spezifischen Fahrerprofils zu ermöglichen, ist die Speichereinrichtung des Fahrerprofils als eine der Steuervorrichtung zugehörige oder - in einer Alternative dazu - mit einer ihr zugeordneten Speichereinrichtung ausgebildet.

Die vorherstehend beschriebenen Vorteile und Ausführungsformen, die sich aus dem Verfahren zum Betreiben einer solchen Steuervorrichtung ergeben, gelten auch für die Steuervorrichtung selbst oder sind äquivalent dazu.

Bei einer besonders zweckmäßigen Ausführungsform der Steuervorrichtung sind die Funktionsgruppen eine Bremsanlage und/oder ein Getriebe und/oder ein Fahrwerk und/oder eine Aerodynamikvorrichtung und/oder eine Lenkung und/oder eine Gasannahme und/oder Gangschaltung eines Kraftfahrzeugs. Die einzelnen Funktionsgruppen ermöglichen eine differenzierte und auf den Fahrer und dessen Fahrverhalten ausgerichtete Einstell- bzw. Abstimmmöglichkeit. Dadurch lassen sich benutzerspezifische bzw. fahrerspezifische Daten leicht ermitteln, analysieren und verwalten.

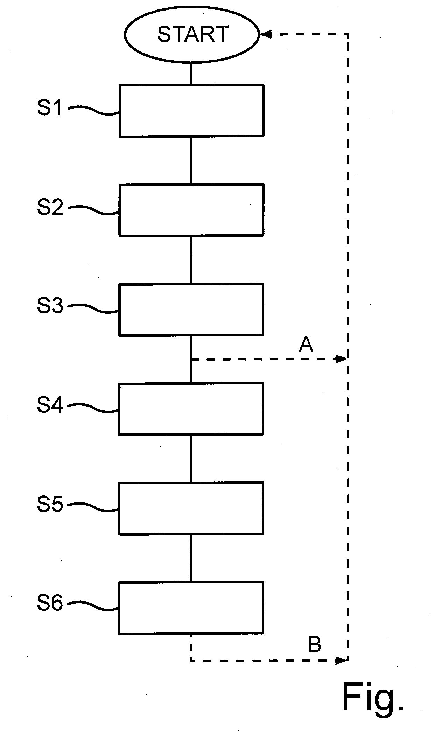

Im Folgenden werden die Erfindung und beispielhafte Ausführungsformen anhand einer Zeichnung näher erläutert. Dabei zeigt die einzige Zeichnung anhand eines Flussdiagramms die einzelnen Verfahrensschritte zum Betreiben einer Steuervorrichtung eines Kraftfahrzeugs mittels eines Fahrerprofils gemäß einer bevorzugten Ausführungsform der Erfindung auf.

Anhand eines Flussdiagramms werden in der Figur die wesentlichen Schritte des Verfahrens zum Betreiben einer Steuervorrichtung eines Kraftfahrzeugs dargestellt, die eine Generierung eines Fahrerprofils ermöglichen, welches anschließend auf ein Fahrzeug des gleichen oder unterschiedlichen Typs übertragen werden kann. Sobald der Fahrer des betreffenden Fahrzeugs das Fahrzeug startet START, erfolgt fortlaufend in vorbestimmten Zeitintervallen eine Aufnahme von Betriebsdaten.

Dabei werden in einem ersten Schritt S1 Betriebsdaten von Parametern von zumindest einer eine Fahrdynamik eines ersten Kraftfahrzeugs charakterisierenden oder beeinflussenden Funktionsgruppe von einer Betriebsdaten-Erfassungseinrichtung aufgenommen. Anhand von Sensoren werden Parameter für beispielsweise Motorendrehzahlgradient, Motorendrehzahlniveau, Beschleunigung, Geschwindigkeit, Schalthäufigkeit, Schaltbereiche sowie Lenkverhalten und dergleichen ermittelt.

In einem darauf folgenden Schritt S2 werden die aufgenommenen Betriebsdaten mittels einer Betriebsdatenverarbeitungseinrichtung zu einem spezifischen Fahrerprofil des Kraftfahrzeugs umgerechnet. Die Betriebsdaten-Verarbeitungseinrichtung kann eine herkömmliche Recheneinheit sein, die entweder dediziert oder als Teil einer kombinierten Schaltung in der Steuervorrichtung des Kraftfahrzeugs verbaut ist. Das spezifische Fahrerprofil wird anschließend in einem weiteren Schritt S3 über eine Schnittstelle zum Ausgeben bereitgestellt, woher das Fahrerprofil in einem weiteren Schritt S4 in einem Zwischenspeicher gespeichert werden kann.

Dabei erfolgt das Aufnehmen der Betriebsdaten der Parameter, das Umrechnen der Betriebsdaten zu einem spezifischen Fahrerprofil fortlaufend in vorbestimmten Zeitintervallen. Dadurch kann sichergestellt werden, dass ein "durchschnittliches" Fahrverhalten des Fahrers das spezifische Fahrerprofil bildet. Durch die fortlaufende Bestimmung des Fahrerprofils wird dieses in vorbestimmten Zeitintervallen angepasst. Durch eine gestrichelte Linie A ist ein Iterationsschritt der fortlaufend in vorbestimmten Zeitintervallen erfolgenden Aufnahme von Betriebsdaten der Parameter - Schritt S1 - sowie dem Umrechnen der Betriebsdaten zu einem spezifischen Fahrerprofil - Schritt S2 - und das bereitstellen der des Fahrerprofils - Schritt S3 - durch die Steuereinheit angedeutet. Die Art und Weise wie dieses erfolgt, beispielsweise eine Gewichtung unterschiedlicher Betriebsdaten von Parametern, soll an dieser Stelle nicht beschrieben werden. Es sei lediglich bemerkt, dass stochastische bzw. wahrscheinlichkeitstheoretische Modelle zur Erstellung des Fahrerprofils Verwendung finden können.

Als Zwischenspeicher für das Fahrerprofil eignete sich sowohl eine Speichereinrichtung die in der Steuervorrichtung des Kraftfahrzeugs integriert ist als auch eine Speichereinrichtung, die unabhängig von dem Kraftfahrzeug untergebracht ist, beispielsweise mobile Datenträger oder Datenbanken eines bestimmten Fahrzeugherstellers oder einer Kfz-Werkstätte. In einer bevorzugten Ausführungsform werden in regelmäßigen Abständen die "temporären" Fahrprofile aus einer der Steuervorrichtung zugehörigen Speichereinrichtung an eine der Steuervorrichtung zugeordneten externen Speichereinrichtung übertragen. Auf diese Art und Weise ist es möglich, ein "Backup" des Fahrerprofils zu erstellen.

Das zwischengespeicherte Fahrerprofil wird nun in einem weiteren Schritt S5 aus dem Zwischenspeicher in einer Speichereinrichtung einer Steuervorrichtung eines Kraftfahrzeugs übertragen. Dabei kann es sich bei der Steuervorrichtung des Kraftfahrzeugs um die Steuervorrichtung desselben oder eines weiteren Kraftfahrzeugs handeln. Im Falle desselben Fahrzeugs kann dadurch eine aufgrund eines Defekts ausgetauschte Steuervorrichtung erneut mit dem Fahrerprofil betrieben werden, das zwischendurch zwischengespeichert wurde. Dadurch kann eine erneute Lernphase einer Steuervorrichtung überbrückt werden, die autonom dazulernt - beispielsweise anhand eines neuronalen Netzes - und dadurch das Kraftfahrzeug wieder auf den spezifischen Fahrer und dessen Fahrstil abgestimmt werden.

Durch eine gestrichelte Linie B ist der Weg der Übertragung des erstellten und zwischengespeicherten Fahrerprofils auf/in eine "neue" Steuervorrichtung eines Kraftfahrzeugs angedeutet.

Bei einer weiteren Option kann das zwischengespeicherten Fahrerprofils in ein Kraftfahrzeug gleichen Typs übertragen werden. In einer besonders bevorzugten Ausführungsform der Erfindung lässt sich das Fahrerprofil mittels zumindest eines Korrekturfaktors auch für eine Übertragung des Fahrprofils in die Steuereinrichtung eines Kraftfahrzeugs unterschiedlichen Typs anpassen. Dazu wird der Korrekturfaktor zum Anpassen des Fahrerprofils des zweiten Kraftfahrzeugs mittels Parametern für einen Schwerpunkt-, Gewichts-, räumlichen Abmessungs-Unterschied des neuen Fahrzeugs im Vergleich zum ursprünglichen Fahrzeug - aus dem das Fahrerprofil stammt - angepasst.

In einem weiteren Schritt S6 kann mit dem eingespielten Fahrerprofil eine Vor-Einstellung von zumindest einer eine Fahrdynamik des Kraftfahrzeugs charakterisierende oder beeinflussende Funktionsgruppe verwendet werden. In anderen Worten bedeutet dies, dass je nach Ausstattung des "neuen" Kraftfahrzeugs ein oder mehrere Funktionsgruppen beeinflusst werden können. Dadurch werden spezifische Funktionsgruppen, beispielsweise die Federungs-Dämpfungsabstimmung des Fahrwerks des Wagens und/oder eine Gasannahme und/oder Gangschaltung des Kraftfahrzeugs voreingestellt, während die Bremsanlage und/oder eine Lenkung anhand der Fahrweise des Fahrers neu angelernt werden. Dadurch lässt sich einfach und flexibel auf die Abstimmung des Kraftfahrzeugs Einfluss nehmen und dadurch die Fahrweise auf den spezifischen Fahrer optimieren - hinsichtlich Kraftstoffverbrauch, Fahrdynamik, usw. des einzelnen spezifischen Fahrers.

In einer weiteren hier nicht dargestellten Ausführungsform der Erfindung werden für ein und dasselbe Fahrzeug mehrere Fahrerprofile erstellt. Dazu ist es lediglich notwendig, dass ein Fahrer des Kraftfahrzeugs sich bei der Steuervorrichtung des Kraftfahrzeugs identifiziert, um dem richtigen Fahrerprofil zugeordnet zu werden. Dadurch kann ein schneller Zugriff auf die Betriebsdaten sichergestellt und gleichzeitig eine Fälschungssicherheit durch Zugangseinschränkung gewährleistet werden.

## Patentansprüche

1. Verfahren zum Betreiben einer Steuervorrichtung eines Kraftfahrzeugs mittels eines Fahrerprofils umfassend die Schritte, dass:
- messtechnisch ermittelte Betriebsdaten von Parametern von zumindest einer eine Fahrdynamik eines ersten Kraftfahrzeugs charakterisierenden oder beeinflussenden Funktionsgruppe von einer Betriebsdaten-Erfassungseinrichtung aufgenommen werden;
- die aufgenommenen Betriebsdaten mittels einer Betriebsdaten-Verarbeitungseinrichtung zu einem spezifischen Fahrerprofil des Kraftfahrzeugs umgerechnet werden;
- das Fahrerprofil des Kraftfahrzeugs über eine Schnittstelle zum Ausgeben bereitgestellt wird;
- das Fahrerprofil in einem Zwischenspeicher gespeichert wird;
- das Fahrerprofil aus dem Zwischenspeicher in eine Speichereinrichtung einer Steuervorrichtung eines Kraftfahrzeugs übertragen wird;
- und von der Steuervorrichtung zum Vor-Einstellen von zumindest einer eine Fahrdynamik eines Kraftfahrzeugs charakterisierenden oder beeinflussenden Funktionsgruppe verwendet wird
**dadurch gekennzeichnet, dass**
beim Übertragen des Fahrerprofils in die Steuereinrichtung eines Kraftfahrzeugs unterschiedlichen Typs, das Fahrerprofil mittels zumindest eines Korrekturfaktors angepasst wird, wobei der Korrekturfaktor zum Anpassen des Fahrerprofils des zweiten Kraftfahrzeugs einen Parameter für einen Schwerpunkts- und/oder einen Gewichts- und/oder räumlichen Abmessungs-Unterschied der beiden Fahrzeuge umfasst.

2. Verfahren nach Anspruch 1,
**dadurch gekennzeichnet, dass**
das Aufnehmen der Betriebsdaten der Parameter, das Umrechnen der Betriebsdaten zu einem spezifischen Fahrerprofil fortlaufend in vorbestimmten Zeitintervallen erfolgt.

3. Verfahren nach Anspruch 1 oder 2,
**dadurch gekennzeichnet, dass**
das Übertragen des Fahrerprofils in eine der Steuervorrichtung zugehörige und/oder zugeordnete Speichereinrichtung erfolgt.

4. Steuervorrichtung eines Kraftfahrzeugs umfassend:
- eine Betriebsdaten-Erfassungseinrichtung für die Aufnahme messtechnisch ermittelter Betriebsdaten von Parametern von zumindest einer eine Fahrdynamik eines ersten Kraftfahrzeugs charakterisierenden oder beeinflussenden Funktionsgruppe;
- eine Betriebsdaten-Verarbeitungseinrichtung zur Umrechnung der aufgenommenen Betriebsdaten der Parameter zu einem spezifischen Fahrerprofil;
- eine Speichereinrichtung die dazu ausgelegt ist, ein Fahrerprofil aufzunehmen, um eine Voreinstellung von zumindest einer eine Fahrdynamik des Kraftfahrzeugs charakterisierende oder beeinflussende Funktionsgruppe vorzunehmen;
- und die Steuervorrichtung eine Schnittstelle zum Ausgeben oder Eingeben des Fahrerprofils aufweist;
**dadurch gekennzeichnet, dass**
die Steuervorrichtung dazu ausgebildet ist, beim Übertragen des Fahrerprofils in die Steuereinrichtung eines Kraftfahrzeugs unterschiedlichen Typs, das Fahrerprofil mittels zumindest eines Korrekturfaktors anzupassen, wobei der Korrekturfaktor zum Anpassen des Fahrerprofils des zweiten Kraftfahrzeugs einen Parameter für einen Schwerpunkts- und/oder einen Gewichts- und/oder räumlichen Abmessungs-Unterschied der beiden Fahrzeuge umfasst.

5. Vorrichtung nach Anspruch 4,
**dadurch gekennzeichnet, dass**
die Speichereinrichtung des Fahrerprofils eine der Steuervorrichtung zugehörige und/oder zugeordnete Speichereinrichtung ist.

6. Vorrichtung nach Anspruch 4 oder 5,
**dadurch gekennzeichnet, dass**
die Funktionsgruppe/n eine Bremsanlage und/oder ein Getriebe und/oder ein Fahrwerk und/oder eine Aerodynamikvorrichtung und/oder eine Lenkung und/oder eine Gasannahme und/oder Gangschaltung eines Kraftfahrzeugs sind.

## Claims

1. Method for operating a control device of a motor vehicle by means of a driver profile, comprising the steps that:
- metrologically established operating data of parameters of at least one functional group which characterises or influences a travel dynamic of a first motor vehicle are received by an operating data detection device;
- the received operating data are converted by means of an operating data processing device to form a specific driver profile of the motor vehicle;
- the driver profile of the motor vehicle is provided via an interface for output;
- the driver profile is stored in an intermediate store;
- the driver profile is transferred from the intermediate store into a storage device of a control device of a motor vehicle;
- and is used by the control device for presetting at least one functional group which characterises or influences a travel dynamic of a motor vehicle,
**characterised in that**,
when the driver profile is transferred to the control device of a motor vehicle of a different type, the driver profile is adapted by means of at least one correction factor, wherein the correction factor in order to adapt the driver profile of the second motor vehicle comprises a parameter for a centre of gravity and/or a weight and/or spatial dimension difference of the two vehicles.

2. Method according to claim 1,
**characterised in that**
the receiving of the operating data of the parameters, the conversion of the operating data to form a specific driver profile is carried continuously at predetermined time intervals.

3. Method according to claim 1 or 2,
**characterised in that**
the transfer of the driver profile is carried out in a storage device which belongs to and/or is associated with the control device.

4. Control device of a motor vehicle comprising:
- an operating data detection device for receiving metrologically established operating data of parameters of at least one functional group which characterises or influences a travel dynamic of a first motor vehicle;
- an operating data processing device for converting the received operating data of the parameters to form a specific driver profile;
- a storage device which is configured to receive a driver profile in order to carry out a pre-adjustment of at least one functional group which characterises or influences a travel dynamic of the motor vehicle;
- and the control device has an interface for outputting or inputting the driver profile;
**characterised in that**
the control device is constructed, when transmitting the driver profile into the control device of a motor vehicle of a different type, to adapt the driver profile by means of at least one correction factor, wherein the correction factor in order to adapt the driver profile of the second motor vehicle comprises a parameter for a centre of gravity and/or a weight and/or spatial dimension difference of the two vehicles.

5. Device according to claim 4,
**characterised in that**
the storage device of the driver profile is a storage device which belongs to and/or is associated with the control device.

6. Device according to claim 4 or 5,
**characterised in that**
the functional group(s) is/are a brake system and/or a gear mechanism and/or a chassis and/or an aerodynamic device and/or a steering system and/or a throttle response and/or gear shift of a motor vehicle.

## Revendications

1. Procédé pour faire fonctionner un dispositif de commande d'un véhicule automobile au moyen d'un profil de conducteur comprenant les étapes, que :
- des données de fonctionnement déterminées métrologiquement de paramètres d'au moins un groupe fonctionnel influençant ou caractérisant une dynamique de conduite d'un premier véhicule automobile sont enregistrées par un dispositif de détection de données de fonctionnement ;
- les données de fonctionnement enregistrées sont converties en un profil de conducteur spécifique du véhicule automobile au moyen d'un dispositif de traitement de données de fonctionnement ;
- le profil de conducteur du véhicule automobile est mis à disposition par le biais d'une interface pour l'édition ;
- le profil de conducteur est mémorisé dans une mémoire tampon ;
- le profil de conducteur est transmis de la mémoire tampon à un dispositif de mémoire d'un dispositif de commande d'un véhicule automobile ;
- et est utilisé par le dispositif de commande pour le pré-réglage d'au moins un groupe fonctionnel influençant ou caractérisant une dynamique de conduite d'un véhicule automobile
**caractérisé en ce que**
lors de la transmission du profil de conducteur dans le dispositif de commande d'un véhicule automobile de type différent, le profil de conducteur est adapté au moyen d'au moins un facteur de correction, dans lequel le facteur de correction pour l'adaptation du profil de conducteur du deuxième véhicule automobile comprend un paramètre pour une différence de centre de gravité et/ou une différence de poids et/ou de dimension spatiale des deux véhicules automobiles.

2. Procédé selon la revendication 1,
**caractérisé en ce que**
l'enregistrement des données de fonctionnement des paramètres, la conversion des données de fonctionnement en un profil de conducteur spécifique a lieu en continu à des intervalles de temps prédéterminés.

3. Procédé selon la revendication 1 ou 2,
**caractérisé en ce que**
la transmission du profil de conducteur dans un dispositif de mémoire appartenant et/ou affecté au dispositif de commande a lieu.

4. Dispositif de commande d'un véhicule automobile comprenant :
- un dispositif de détection de données de fonctionnement pour l'enregistrement de données de fonctionnement déterminées métrologiquement de paramètres d'au moins un groupe fonctionnel influençant ou caractérisant une dynamique de conduite d'un premier véhicule automobile ;
- un dispositif de traitement de données de fonctionnement pour la conversion des données de fonctionnement enregistrées des paramètres en un profil de conducteur spécifique ;
- un dispositif de mémoire qui est conçu pour enregistrer un profil de conducteur pour procéder à un préréglage d'au moins un groupe fonctionnel influençant ou caractérisant une dynamique de conduite du véhicule automobile ;
- et le dispositif de commande présente une interface pour l'édition ou la saisie du profil de conducteur ;
**caractérisé en ce que**
le dispositif de commande est réalisé pour adapter lors de la transmission du profil de conducteur dans le dispositif de commande d'un véhicule automobile de type différent, le profil de conducteur au moyen d'au moins un facteur de correction, dans lequel le facteur de correction pour l'adaptation du profil de conducteur du deuxième véhicule automobile comprend un paramètre pour une différence de centre de gravité et/ou une différence de poids et/ou de dimension spatiale des deux véhicules automobiles.

5. Dispositif selon la revendication 4,
**caractérisé en ce que**
le dispositif de mémoire du profil de conducteur est un dispositif de mémoire appartenant et/ou affecté au dispositif de commande.

6. Dispositif selon la revendication 4 ou 5,
**caractérisé en ce que**
le(s) groupe(s) fonctionnel(s) sont un système de freinage et/ou une transmission et/ou un châssis et/ou un dispositif aérodynamique et/ou une direction et/ou une admission de gaz et/ou un changement de vitesse d'un véhicule automobile.
